# EUROPÄISCHE PATENTSCHRIFT

(11) **EP 3 017 211 B1**
(45) Veröffentlichungstag und Bekanntmachung des Hinweises auf die Patenterteilung: **28.12.2016**
(21) Anmeldenummer: 15704003.1
(22) Anmeldetag: 12.02.2015
(51) Int. Cl.: F16F 3/10, F16F 1/368, B60G 11/04, B60G 11/10, F16F 1/22

(54) **BLATTFEDER UND BLATTFEDERANORDNUNG**
LEAF SPRING AND LEAF SPRING ASSEMBLY
RESSORT À LAME ET AGENCEMENT DE RESSORTS À LAME

(30) Priorität: 12.02.2014 DE 102014202581
(43) Veröffentlichungstag der Anmeldung: 11.05.2016
(73) Patentinhaber: Muhr und Bender KG, 57439 Attendorn (DE)
(72) Erfinder: ASBECK, Jochen, 57439 Attendorn (DE); PICUR, Sascha, 57482 Wenden (DE); HESSELMANN, Bernfried, 57482 Wenden (DE)
(74) Vertreter: Neumann Müller Oberwalleney & Partner Patentanwälte
(86) Internationale Anmeldenummer: PCT/EP2015/052955
(87) Internationale Veröffentlichungsnummer: WO 2015/121345

(56) Entgegenhaltungen:
- WO-A1-01/69103
- WO-A1-97/29920
- WO-A1-2009/027710
- DE-A1-102010 015 951
- JP-A- S6 175 005
- JP-A- 2003 335 119
- JP-A- 2005 096 493
- JP-A- 2006 044 345
- US-A- 226 536
- US-A- 1 182 181
- US-A- 1 324 440

## Beschreibung

Die Erfindung betrifft eine Blattfederanordnung, insbesondere für eine Radaufhängung eines Kraftfahrzeugs, mit einer Blattfeder, einer ersten Aufnahmevorrichtung zur Lagerung eines ersten Federendes und einer zweiten Aufnahmevorrichtung zur Lagerung des zweiten Federendes, wobei die Blattfeder ein erstes Federteil aus einem faserverstärkten Kunststoffmaterial und ein zweites Federteil aus einem Stahlwerkstoff aufweist..

Aus der JP 2005096493 A ist eine Radaufhängungsvorrichtung mit einer Blattfeder bekannt. Die Blattfeder weist ein vorderes Federblatt und ein hinteres Federblatt auf, die miteinander über Bolzen verbunden sind. Die Enden des vorderen und hinteren Federblatts sind jeweils schwenkbar an einem Seitenträger gelagert. Eine Radachse ist an dem vorderen Federblatt fixiert. Das hintere Federblatt hat einen U-förmig gekrümmten Abschnitt, welcher eine belastungsbedingte Verformung der Blattfeder ermöglicht. Für das vordere Federblatt kann Federstahl oder faserverstärktem Kunststoff verwendet werden und für das hintere Federblatt kann Kohlenstoffstahl oder legierter Stahl verwendet werden.

Aus der JP 2003335119 A ist eine Blattfeder für eine Radaufhängung bekannt, die ein dickes vorderes Federblatt und ein dünnes hinteres Federblatt aufweist, die miteinander verbunden sind. Das vordere Federblatt ist mit seinem vorderen Ende an einem Fahrwerkrahmen schwenkbar gelagert und mit seinem hinteren Ende an einer Radachse befestigt. Das hintere Federblatt weist einen gebogenen mittleren Abschnitt auf und ein hinteres Ende, das an dem Fahrwerkrahmen schwenkbar gelagert ist. Das dünnere hintere Federblatt ist separat hergestellt und wärmebehandelt.

Aus der JP S61 75005 A ist eine Blattfederanordnung mit einer Blattfeder aus faserverstärktem Kunststoff bekannt. Ein Ende der Blattfeder ist mit einem Augenteil verbunden. Das Augenteil ist über einen Bolzen mit einer Lasche schwenkbar verbunden, die wiederum schwenkbar mit der Fahrzeugkarosserie verbunden ist. Das Augenteil ist am äußersten Ende der Blattfeder angeschlossen und dient rein zur Befestigung der Blattfeder.

Aus der DE 103 23 693 B3 ist ein Blechelement aus flexibel gewalztem Bandmaterial bekannt.

Aus der DE 10 2010 015 951 A1 ist eine Blattfeder für Kraftfahrzeuge bekannt, die aus faserverstärktem Kunststoffmaterial hergestellt ist. Die Blattfeder soll auftretende Seitenführungskräfte aufnehmen und auf eine Blattfederaufnahmevorrichtung übertragen. Die Blattfeder umfasst einen Biegegelenkabschnitt und einen Federungsabschnitt.

Aus der US 2008/0252033 A1 ist eine Blattfeder für eine Radaufhängung eines Kraftfahrzeugs bekannt. Die Blattfeder ist aus einem faserverstärkten Kunststoff hergestellt und an ihren Enden mit elastischen Körpern verbunden, die wiederum am Fahrwerk des Kraftfahrzeugs befestigt sind. In einer Ausführungsform sind die Enden nach oben abgebogen und in jeweils einer elastischen Buchse um eine Längsachse des Kraftfahrzeugs schwenkbar gelagert.

Aus der DE 10 2009 032 919 A1 ist eine Federungsanordnung mit einer Blattfeder aus Faserverbundwerkstoff bekannt. Die Blattfeder hat einen Mittelabschnitt und zwei daran anschließende Endabschnitte, die jeweils in einem Lagerbock aufgenommen sind.

Aus der DE 898 154 A1 ist eine Abfederung von Schienenfahrzeugen mit einer Blattfeder bekannt. Ein Ende der Blattfeder ist als Auge ausgebildet und hierüber am Untergestell gelagert. Mit zunehmender Durchbiegung stützen sich die Federenden der Blattfeder auf elastische Auflager ab.

Aus der DE 2009 015 662 B3 ist eine Federungsanordnung mit einer Blattfeder für ein Kraftfahrzeug bekannt. Die Blattfeder ist aus Faserverbundwerkstoff hergestellt und an einem Ende in einem Klemmkörper gehalten. Der Klemmkörper ist schwenkbar am Lagerbock des Kraftfahrzeugs befestigt. Es ist ein Anschlag am Lagerbock vorgesehen, gegen den sich der Klemmkörper abstützen kann.

Blattzugfedern müssen im Bereich des gekrümmten Abschnitts eine sehr hohe Verformbarkeit aufweisen. Diese ist erforderlich ist, um bei zunehmenden Einfederung neben einer Biegebelastung eine Zugbeanspruchung in den gekrümmten Abschnitt einzuleiten. Die Steifigkeit der Blattfeder infolge dieser Zugbeanspruchung ist überproportional hoch, so dass sich mit zunehmender Einfederung eine starke Progression in der Federrate einstellt. Aufgrund dieser hohen Verformungsanforderungen im gekrümmten Abschnitt eignet sich im Besonderen glasfaserverstärkter Kunststoff (GFK) als Werkstoff, der neben einer hohen Elastizität und ertragbaren Spannung auch ein besonders geringes Gewicht aufweist.

Bisweilen ist es schwierig, den gegenläufigen Anforderungen an eine Blattzugfeder, nämlich hohe Elastizität in bestimmten Bereichen einerseits und hohe Festigkeit in anderen Bereichen andererseits gerecht zu werden.

Der vorliegenden Erfindung liegt die Aufgabe zugrunde, eine Blattfederanordnung mit einer Blattfeder für Kraftfahrzeuge vorzuschlagen, die neben der Sicherstellung der Funktion, nämlich einer progressiven Federkennlinie bei ausreichender Festigkeit die Anforderungen an die Robustheit in der jeweiligen technischen Anwendung zuverlässig erfüllt, und gleichzeitig ein geringes Gewicht aufweist. Ferner soll die Blattfederanordnung eine lange Lebensdauer haben.

Die Lösung besteht in einer Blattfederanordnung für eine Radaufhängung eines Kraftfahrzeugs, umfassend: eine Blattfeder mit einem ersten Federteil aus einem faserverstärkten Kunststoffmaterial und einem zweiten Federteil aus einem Federstahl, wobei das erste Federteil und das zweite Federteil miteinander verbunden sind, wobei das Verhältnis der Länge des ersten Federteils zur Länge des zweiten Federteils größer als zwei ist, und wobei im entspannten Zustand das erste Federteil eine untere konvexe Wölbung aufweist und das zweite Federteil ausgehend vom ersten Federteil nach unten abgebogen ist und eine untere konkave Wölbung aufweist; eine erste Aufnahmevorrichtung, in der ein erster Endabschnitt der Blattfeder gelagert ist; eine zweite Aufnahmevorrichtung, in der ein zweiter Endabschnitt der Blattfeder gelagert ist; wobei die erste Aufnahmevorrichtung und die zweite Aufnahmevorrichtung derart gestaltet sind, dass der erste Endabschnitt und der zweite Endabschnitt der Blattfeder verschiebungsfest relativ zueinander gehalten sind.

Ein Vorteil der Blattfeder besteht darin, dass diese im zweiten Federteil eine besonders hohe Festigkeit aufweist. Gleichzeitig hat die Blattfeder aufgrund der Länge und des Faserverbundmaterials des ersten Federteils ein geringes Gewicht. Insgesamt vereint die genannte Blattfeder damit die Anforderungen an eine hochbelastbare und leichte Feder mit einer progressiven Federkennlinie, die auch als Federrate bezeichnet wird. Dadurch, dass das erste Federteil mehr als doppelt so lang ist wie das zweite Federteil, erfolgt eine funktionale Trennung zwischen den beiden Federteilen. Dabei nimmt der lange erste Federteil im Wesentlichen die eigentliche Federungsfunktion der Blattzugfeder wahr, während das kurze zweite Federteil im Wesentlichen eine Biegegelenkfunktion wahrnimmt, um ein Einfedern des ersten Federteils zu kompensieren. Die genannten Längen der Federteile beziehen sich insbesondere auf die Länge des jeweiligen Federteils in Draufsicht auf die unbelastete Feder. Es versteht sich jedoch, dass auch eine andere Betrachtung der Länge denkbar ist, wie beispielsweise die Länge der Abwicklung des jeweiligen Federteils.

Eine progressive Federkennlinie wird insbesondere dadurch erreicht, dass die Enden der Blattfeder verschiebungsfest in entsprechenden Lagerungen aufgenommen werden. Durch die verschiebungsfeste Aufnahme der Federenden nimmt die Zugspannung mit steigender Belastung der Blattfeder progressiv zu, so dass auch deren Federkennlinie progressiv steigt. Im Einbauzustand hat dies zur Folge, dass die Federung bei zunehmender Beladung des Kraftfahrzeugs steifer wird, was sich günstig auf den Fahrkomfort und die Fahrstabilität auswirkt.

Die Blattzugfeder eignet sich besonders zum Einsatz in leichten Nutzfahrzeugen und Pick-ups. Für diese Anwendungsgebiete ist ein sehr robustes Produktdesign erforderlich. Die Robustheit bei Fahrwerkkomponenten bezieht sich auf alle Umwelteinflüsse, aber auch mechanische Einflüsse wie Steinschlag. Die Empfindlichkeit von glasfaserverstärktem Kunststoff ist aufgrund der vergleichsweise geringen Härte und Verschleißfestigkeit im Hinblick auf diese Einflüsse eher hoch. Insofern sorgt das aus Stahlwerkstoff hergestellte zweite Federteil in dem Abschnitt höherer Belastung für eine größere Festigkeit. Insgesamt hat die Blattfeder damit eine besonders lange Lebensdauer bei leichter Bauweise.

Der erste und der zweite Federabschnitt der Blattfeder, die auch als Federanordnung bezeichnet werden kann, unterscheiden sich hinsichtlich ihrer Länge und/oder Krümmung voneinander. Im Einbauzustand der Blattfeder ist an dem ersten Federteil ein Radträger befestigt, über den die Kräfte des Fahrzeugrads in die Blattfeder eingeleitet werden. Insofern erstreckt sich das erste Federteil im Einbauzustand vorzugsweise im Wesentlichen in Längsrichtung des Kraftfahrzeugs. Dabei verläuft eine gedachte erste Linie durch die Enden des ersten Federteils im Wesentlichen horizontal beziehungsweise schließt mit der Horizontalen einen kleinen ersten Winkel ein. Das zweite Federteil ist ausgehend vom ersten Teil nach unten abgebogen. Dabei verläuft eine gedachte zweite Linie durch die beiden Enden des zweiten Federteils winklig zur ersten Linie und schließt mit der Horizontalen einen größeren zweiten Winkel ein. Die vom Radträger in das erste Federteil eingeleiteten Vertikalkräfte führen im zweiten Federteil zunächst zu einer Biegebelastung und dann mit zunehmendem Aufbiegen des zweiten Federteils zu einer zunehmenden Zugbelastung. Auf diese Weise steigt die Federrate der gesamten Federanordnung mit zunehmender Belastung progressiv an.

Es ist denkbar, dass die Blattzugfeder neben dem ersten Federteil und dem zweiten Federteil ein oder mehrere weitere Federteile aufweist. Insbesondere kann vorgesehen sein, dass an beiden Enden des aus Kunststoff hergestellten ersten Federteils jeweils ein zweites Federteil aus Stahlwerkstoff angeschlossen ist.

Durch konstruktive Auslegung des ersten Federteils. beziehungsweise des zweiten Federteils hinsichtlich physikalischer Parameter, wie Querschnittsfläche, Länge oder Breite, lässt sich das Federungsverhalten beziehungsweise die Progression der Blattfeder einstellen. Dabei gilt, dass je länger das zweite Federteil oder je kleiner die Querschnittsfläche des zweiten Federteils ist, desto weicher ist die Feder, beziehungsweise umgekehrt, je kürzer oder dicker das zweite Federteil ist, desto steifer ist die Feder. Das erste Federteil hat im entspannten Zustand eine untere konvexe Wölbung beziehungsweise Krümmung. Das zweite Federteil hat im entspannten Zustand eine untere konkave Wölbung beziehungsweise Krümmung. Im Einbauzustand der Federanordnung wölbt sich ein zentraler Abschnitt des ersten Federteils nach oben, so dass die untere konvexe Krümmung zu einer Geraden oder leicht konkaven Krümmung umgeformt wird. Das zweite Federteil wird aufgebogen, das heißt der Krümmungsradius vergrößert sich, wodurch die Federsteifigkeit der gesamten Federanordnung zunimmt.

Das zweite Federteil umfasst einen im Wesentlichen geraden Biegeabschnitt und einen sich in Richtung erstem Federteil anschließenden gekrümmten Abschnitt. Mit im Wesentlichen gerade soll die Möglichkeit mit eingeschlossen sein, dass dieser oder ein Teilabschnitt hiervon eine große Krümmung aufweist, deren Radius größer ist als der des gekrümmten Abschnitts. Der Biegeabschnitt wird bei Belastung des ersten Federteils in Richtung zum ersten Federende gebogen und kompensiert so eine Verformung des ersten Federteils. Mit zunehmendem Aufbiegen des zweiten Federteils nehmen die Zugbelastungen und Federsteifigkeit zu.

Vorzugsweise hat das erste Federteil einen zentralen Aufnahmebereich zur Aufnahme eines Anschlussbauteils, beispielsweise des Radträgers oder einem hiermit verbundenen Trägerteil, wobei der zentrale Aufnahmebereich insbesondere eine größere Dicke hat als hieran anschließende Bereiche des ersten Federteils. Durch die größere Dicke werden die Spannungen in dem Aufnahmebereich, welcher gleichzeitig den Bereich der Krafteinleitung vom Anschlussbauteil bildet, gering gehalten. Mit zentraler Aufnahmebereich ist insbesondere gemeint, dass der Aufnahmebereich etwa mittig im ersten Federteil angeordnet ist, vorzugsweise in einem mittleren Drittel des ersten Federteils. Der Aufnahmebereich hat insbesondere eine ebene Oberseite und/oder eine ebene Unterseite, die parallel zueinander ausgerichtet sein können. Hiermit wird eine gute Krafteinleitung eines an der Blattfeder zu befestigenden Trägerteils für das Fahrzeugrad gewährleistet. Dieser ebene Aufnahmebereich kann eine Länge von etwa 150 mm bis 200 mm haben. Vorzugsweise haben die an den Aufnahmebereich seitlich anschließenden Bereiche in unbelasteter Einbaulage der Blattfeder jeweils eine Steigung, die ausgehend vom Aufnahmebereich in Richtung zum jeweiligen Ende des ersten Federteils ansteigt. Insgesamt ergibt sich somit eine etwa U-förmige Ausgestaltung des ersten Federteils in unbelastetem Zustand.

Erfindungsgemäß ist das zweite Federteil kürzer als das erste Federteil. Dabei kann das Verhältnis zwischen erstem und zweitem Federteil größer 2 : 1, insbesondere größer 3 : 1 sein. Die Ausgestaltung der Blattfeder erfolgt anhand der technischen Anforderungen an das Federverhalten. Grundsätzlich gilt, dass das die Blattfeder mit größerer Länge des zweiten Federteils im Verhältnis zum ersten Federteil ein weicheres Federverhalten hat, beziehungsweise bei kürzerer Länge ein entsprechend härteres Federverhalten.

Vorzugsweise ist eine größte Dicke des zweiten Federteils kleiner als eine größte Dicke des ersten Federteils. Hiermit hat das aus Faserverbundmaterial hergestellte erste Federteil eine hohe Festigkeit. Gleichzeitig hat das aus Federstahl gebildete zweite Federteil gute Biegeeigenschaften. Zur konstruktiven Auslegung kann vorgesehen sein, dass das erste Federteil und/oder das zweite Federteil eine variable Dicke über der Länge aufweist.

Nach einer möglichen Ausgestaltung ist die Querschnittsfläche des ersten Federteils über der Länge im Wesentlichen konstant, während die Dicke über der Höhe variabel sein kann, beispielsweise im Bereich der Radträgeraufnahme oder den Endabschnitten der Blattfeder. Durch die konstante Querschnittsfläche wird ein gleichmäßiger Faserverlauf in dem ersten Federteil über der Länge erreicht, was zu einer hohen Festigkeit führt. Es ist jedoch ebenso denkbar, dass die Querschnittsfläche über der Länge des ersten Federteils variabel ist, was beispielsweise durch zusätzliche Lagen von Prepregs in den entsprechenden Bereichen erreicht werden kann.

Nach einer bevorzugten Ausgestaltung ist das erste Federteil einteilig im Wege des Harzinjektionsverfahrens (Resin Transfer Moulding, RTM) oder durch ein Pressverfahren hergestellt. Das erste Federteil kann insbesondere aus unidirektionalen vorimprägnierten Fasern, sogenannten Prepregs, mit duroplastischer oder thermoplastischer Matrix im Pressverfahren hergestellt werden. Auf diese Weise kann die gewünschte Formgebung des ersten Federteils im unbelasteten Zustand auf einfache Weise erreicht werden. Als Fasern können beispielsweise Glasfasern verwendet werden.

Das zweite Federteil kann nach einer günstigen Ausgestaltung aus flexibel gewalztem Bandmaterial hergestellt sein. Beim Flexiblen Walzen wird Bandmaterial mit im Wesentlichen einheitlicher Blechdicke durch Verändern des Walzspalts während des Prozesses zu Bandmaterial mit variabler Blechdicke über der Länge ausgewalzt. Die durch das Flexible Walzen erzeugten Abschnitte unterschiedlicher Dicke erstrecken sich quer zur Längsrichtung (Walzrichtung) des Bandmaterials.

Das zweite Federteil kann eine Federlage aufweisen, oder aus zwei oder mehr Federlagen zusammengesetzt sein, die jeweils mit dem ersten Federteil verbunden sind. Durch die Anzahl der Federlagen kann das Federverhalten der Blattfeder eingestellt werden. Dabei gilt, dass die Federsteifigkeit mit steigender Anzahl der Federlagen zunimmt. Die Spannungen sind im zweiten Federteil bei Verwendung von mehreren Federlagen verringert. Bei Verwendung von zwei oder mehreren Federlagen werden diese funktional parallel angeordnet, beziehungsweise wirken diese funktional parallel. Hiermit ist insbesondere gemeint, dass jede der Federlagen mit einem Ende am ersten Federteil und mit dem anderen Ende am Lager fixiert ist. Auf diese Weise kann jede einzelne Federlage einen Teil der gesamten zwischen dem ersten Federteil und dem zweiten Lager wirkenden Kräfte und Momente übertragen. Die einzelnen Federlagen können als separate Teile gestaltet sein, wobei beispielsweise eine erste Federlage mit einer oberen Seite des ersten Federteils verbunden sein kann und eine zweite Federlage mit einer unteren Seite des ersten Federteils verbunden sein kann, wobei dir Ortsangaben oben und unten sich auf die Einbaulage der Blattzugfeder beziehen. Nach einer ergänzenden oder alternativen Möglichkeit können auch mehrere Federlagen miteinander verbunden sein, insbesondere einteilig hergestellt sein. Hierfür kann vorgesehen sein, dass das zweite Federteil zumindest einen Schlitz aufweist, der sich in Längsrichtung erstreckt. Durch einen Schlitz im Federteil werden zwei parallele Federlagen gebildet. Der Schlitz kann endlich gestaltet sein, das heißt, die beiden von dem Schlitz getrennten Federlagen sind an den beiden Enden miteinander verbunden. Es ist auch denkbar, dass sich der Schlitz an einem Ende bis zum endseitigen Rand des Federteils erstreckt und am anderen Ende zum endseitigen Rand beabstandet ist.

Das erste und das zweite Federteil können fest, insbesondere biegesteif beziehungsweise momentenfest, miteinander verbunden sein. Die Verbindung der beiden Federteile erfolgt insbesondere in einem Überlappungsbereich. Dabei kann vorgesehen sein, dass die untere konvexe Krümmung des ersten Federteils und die untere konkave Krümmung des zweiten Federteils im Überlappungsbereich ineinander übergehen. Es findet im Überdeckungsbereich also eine Änderung der Krümmung zwischen konkav und konvex statt, das heißt der Überdeckungsbereich beinhaltet hinsichtlich des Krümmungsverlaufs der Blattfeder einen Wendepunkt.

Die Verbindung zwischen den beiden Federteilen kann prinzipiell auf jede technisch denkbare Art erfolgen, kraftschlüssig, formschlüssig, stoffschlüssig, oder Kombinationen davon. Eine einfache Verbindung wird mittels Schrauben erreicht, die im Überlappungsbereich durch entsprechende miteinander fluchtende Bohrungen des ersten und zweiten Federteils durchgesteckt und jeweils mittels einer Mutter verspannt werden. Alternativ oder in Ergänzung können ein oder mehrere Gummielemente (Gummilager, Gummiauflage) zur Verbindung zwischen dem ersten und zweiten Federteil vorgesehen werden. Diese ermöglichen eine schwingungsmäßige und akustische Entkopplung des Kunststoff-Federteils und des Stahl-Federteils. Bei Verwendung einer einzigen Federlage des zweiten Federteils kann der Befestigungsabschnitt des ersten Federteils zwischen dem zweiten Federteil und einer Halteplatte verspannt werden. Bei Verwendung von zwei oder mehr Federlagen kann das erste Federteil zwischen diesen zwei Federlagen angeordnet und verspannt werden. Der Befestigungsabschnitt des ersten Federteils kann keilförmig mit zum Ende sich verjüngender Dicke gestaltet sein. Der entgegengesetzte Endabschnitt des ersten Federteils, der mit einer Aufnahmevorrichtung zu verbinden ist, kann keilförmig mit zum Ende hin sich keilförmig größer werdender Dicke gestaltet sein. An diesem Ende kann ein Lagerelement zur Lagerung des ersten Federteils befestigt ist. Das Lagerelement kann beispielsweise durch Schraubverbindungen mit dem ersten Federteil fixiert werden. Nach einer alternativen Möglichkeit können das erste und das zweite Federteil prinzipiell auch gelenkig miteinander verbunden werden, insbesondere um eine Schwenkachse, die quer zur Längserstreckung der Blattfeder liegt.

Das zweite Federteil ist aus Federstahl hergestellt. Als Federstahl werden Werkstoffe für die Herstellung technischer Federn bezeichnet. Eine technische Feder ist ein Bauteil, das die von außen aufgenommene Krafteinwirkung aufnehmen, speichern und dann auch wieder abgeben kann. Der Federstahl wird vorzugsweise vergütet, das heißt einer Wärmebehandlung durch Härten und anschließendes Anlassen unterzogen zum Erzielen einer optimalen Kombination von hoher Festigkeit und guter Zähigkeit. Die Härte des Martensits wird beim Anlassen verringert, die Zähigkeit verbessert. Als Werkstoffe für den Federstahl kommen prinzipiell alle härtbaren Stähle in Frage. Die Federeigenschaft wird bei Federstahl durch den Zusatz verschiedener Legierungselemente erreicht. Dabei kommen einzeln oder in Kombination die Elemente Silizium, Mangan, Chrom, Vanadium oder Molybdän in Frage. Besonders gut geeignet für die Anforderungen an Federn sind Silizium-Chrom-Stähle, Silizium-Chrom-Vanadium-Stähle und Chrom-Vanadium-Stähle. Beispielhaft für einen Federstahlwerkstoff sei hier 51CrV4 genannt, wobei jeder andere Federstahl ebenso verwendbar ist. Für die Verbindung mit einer Aufnahmevorrichtung kann das zweite Federteil endseitig ein angeformtes Lagerauge aufweisen. Dies wird vorzugsweise im Wege eines Umformverfahrens an das Stahlbauteil angerollt.

Ein Vorteil der Blattfederanordnung besteht darin, dass die Blattfeder aufgrund der verschiebungsfesten Fixierung der Endabschnitte sowohl auf Biegung als auch auf Zug beansprucht wird. Dabei überlagern sich die in der Feder auftretenden Zug- und Biegespannungen und führen so insgesamt zu einer progressiven Federkennlinie. Die Zugkräfte werden dadurch in der Blattfeder erzeugt, dass deren Endabschnitte jeweils verschiebungsfest in den zugehörigen Aufnahmevorrichtungen fixiert sind. Mit verschiebungsfest ist in diesem Zusammenhang gemeint, dass die Endabschnitte in Längsrichtung des Kraftfahrzeugs fest eingespannt sind, so dass sie sich bei Belastung der Feder zumindest nicht wesentlich in Längsrichtung verlagern können. Es versteht sich, dass eine geringfügige Verschiebbarkeit, die sich beispielsweise aufgrund belastungsbedingter elastischer Verformungen insbesondere an einer schwenkbaren Aufnahmevorrichtung ergeben können, mit umfasst sein sollen. Diese geringfügigen Verschiebbarkeiten können an jeder Aufnahmevorrichtung bis zu 20 mm, vorzugsweise bis zu 10 mm betragen. Durch die im Wesentlichen verschiebungsfeste Aufnahme der Blattfederenden nimmt die Zugspannung mit steigender Belastung der Blattfeder progressiv zu, so dass auch deren Federkennlinie progressiv zunimmt. Im Einbauzustand hat dies zur Folge, dass die Federung bei zunehmender Beladung des Kraftfahrzeugs steifer wird, was sich günstig auf den Fahrkomfort und die Fahrstabilität auswirkt.

Nach einer bevorzugten Ausgestaltung ist zumindest eine von der ersten und der zweiten Aufnahmevorrichtung derart gestaltet, dass der jeweils zugehörige Endabschnitt um eine quer zur Fahrzeuglängsachse verlaufende Schwenkachse schwenkbar gelagert ist.

Mit zumindest eine der Aufnahmevorrichtungen ist gemeint, dass nach einer ersten Möglichkeit nur eine der ersten und zweiten Aufnahmevorrichtung als schwenkbares beziehungsweise momentenfreies Lager für das zugehörige Federende ausgestaltet ist, während die jeweils andere Aufnahmevorrichtung als starres beziehungsweise momentenfestes Lager gestaltet ist. Eine Schwenkbarkeit führt zu einer Momentenfreiheit um die Schwenkachse, so dass die Begriffe schwenkbar und momentenfrei vorliegend synonym verwendet werden. Ein momentenfestes Lager ist nicht schwenkbar und wird vorliegend daher auch als starr bezeichnet. Die Zuordnung der schwenkbaren (momentenfreien) und starren (momentenfesten) Lagerung zum ersten beziehungsweise zweiten Federteil können je nach Anforderung an das Federverhalten frei gewählt werden. Es können nach einer zweiten Möglichkeit auch beide Aufnahmevorrichtungen als momentenfreie Lager ausgestaltet sein.

Eine momentenfreie Lagerung führt an der Aufnahmevorrichtung zu verringerten Kräften zwischen der Blattfeder und der Aufnahmevorrichtung. Die momentenfreie Lagerung wird insbesondere dadurch bewerkstelligt, dass der zugehörige Endabschnitt um eine Schwenkachse schwenkbar in der Aufnahmevorrichtung beziehungsweise gegenüber einem ortsfesten Bauteil gelagert ist. Die Schwenkachse verläuft vorzugsweise zumindest im Wesentlichen quer zur Fahrzeuglängsachse, wobei Winkelabweichungen von ± 10° relativ zu einer Normalen zur Fahrzeuglängsachse mit umfasst sein sollen. Das Schwenklager ist vorzugsweise so gestaltet, dass Drehbewegungen des schwenkbar aufgenommenen Federendes um bis zu mindestens 10° und/oder um bis zu maximal 60°, vornehmlich um einen Verdrehwinkel von 25° bis 45°, um die Schwenkachse möglich sind.

Die Zuordnung des längeren Federteils beziehungsweise kürzeren Federteils zur momentenfreien beziehungsweise momentenfesten Aufnahmevorrichtung ist in Abhängigkeit von dem gewünschten Federungsverhalten frei wählbar. Bei momentenfester Lagerung des langen ersten Federteils und momentenfreier Lagerung des kurzen zweiten Federteils wird eine verhältnismäßig hohe Federrate beziehungsweise hohe Federkraft erzeugt. Bei umgekehrter Zuordnung, das heißt momentenfreie Lagerung des langen ersten Federteils und momentenfester Lagerung des kurzen zweiten Federteils, werden eine um ein Vielfaches geringere Federrate und niedrigere Federkräfte erzeugt. Geringste Federraten und Federkräfte liegen an, wenn beide Enden der Blattfeder momentenfrei gelagert sind.

Bevorzugte Ausführungsformen der Erfindung werden nachstehend anhand der Zeichnungsfiguren erläutert. Hierin zeigt:
- Figur 1: eine erfindungsgemäße Blattfeder für eine Radaufhängung eines Kraftfahrzeugs in einer ersten Ausführungsform
a) in Seitenansicht;
b) in Draufsicht;
c) in dreidimensionaler Ansicht;
d) das zweite Federteil als Detail in Seitenansicht;
e) das zweite Federteil als Detail in Draufsicht;
- Figur 2: eine erfindungsgemäße Blattfeder für eine Radaufhängung eines Kraftfahrzeugs in einer zweiten Ausführungsform
a) in Seitenansicht;
b) in Draufsicht;
c) in dreidimensionaler Ansicht;
- Figur 3: eine erfindungsgemäße Blattfeder für eine Radaufhängung eines Kraftfahrzeugs in einer dritten Ausführungsform
a) in Seitenansicht;
b) in Draufsicht;
c) in dreidimensionaler Ansicht;

Figur 4 eine erfindungsgemäße Blattfeder für eine Radaufhängung eines Kraftfahrzeugs in einer vierten Ausführungsform
a) in Seitenansicht;
b) in Draufsicht;
c) in dreidimensionaler Ansicht;

Figur 5 eine erfindungsgemäße Blattfeder für eine Radaufhängung eines Kraftfahrzeugs in einer fünften Ausführungsform
a) in Seitenansicht;
b) in Draufsicht;
c) in dreidimensionaler Ansicht;
d) die Verbindung zwischen erstem und zweitem Federteil in dreidimensionaler Darstellung von schräg unten;

Figur 6 eine erfindungsgemäße Blattfeder für eine Radaufhängung eines Kraftfahrzeugs in einer sechsten Ausführungsform
a) in Seitenansicht;
b) in Draufsicht;
c) in dreidimensionaler Ansicht;

Figur 7 eine erfindungsgemäße Blattfeder für eine Radaufhängung eines Kraftfahrzeugs in einer siebten Ausführungsform
a) in Seitenansicht;
b) in Draufsicht;
c) in dreidimensionaler Ansicht;

Figur 8 eine erfindungsgemäße Blattfeder für eine Radaufhängung eines Kraftfahrzeugs in einer achten Ausführungsform
a) in Seitenansicht;
b) in Draufsicht;
c) in dreidimensionaler Ansicht;
d) das zweite Federteil als Detail in Seitenansicht;
e) das zweite Federteil als Detail in Draufsicht;

Figur 9 eine erfindungsgemäße Blattfeder für eine Radaufhängung eines Kraftfahrzeugs in einer neunten Ausführungsform
a) in Seitenansicht;
b) in Draufsicht;
c) in dreidimensionaler Ansicht;

Figur 10 eine erfindungsgemäße Blattfeder für eine Radaufhängung eines Kraftfahrzeugs in einer zehnten Ausführungsform
a) in Seitenansicht;
b) in Draufsicht;
c) in dreidimensionaler Ansicht;

Figur 11 eine erfindungsgemäße Blattfeder für eine Radaufhängung eines Kraftfahrzeugs in einer elften Ausführungsform
a) in Seitenansicht;
b) in Draufsicht;
c) in dreidimensionaler Ansicht;

Figur 12 eine erfindungsgemäße Blattfederanordnung
a) mit einer Blattfeder gemäß Figur 1;
b) mit einer Blattfeder gemäß Figur 3.

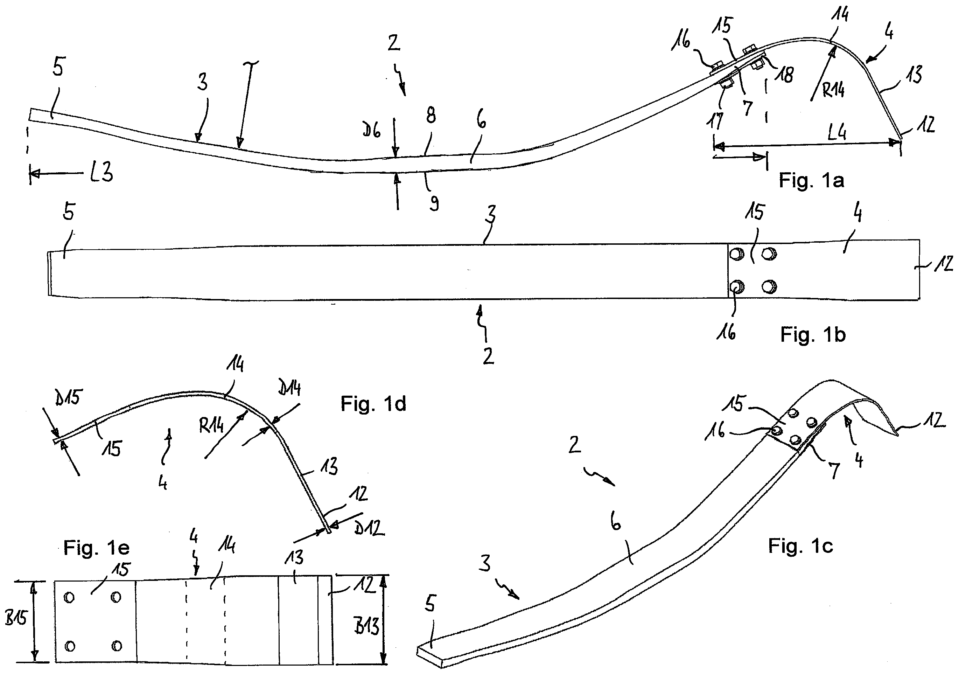

Die Figuren 1a) bis 1e) werden im Folgenden gemeinsam beschrieben. Es ist eine Blattfeder 2 in einer ersten Ausführungsform gezeigt. Die Blattfeder 2 weist ein erstes Federteil 3 aus faserverstärktem Kunststoffmaterial und ein hiermit fest verbundenes zweites Federteil 4 aus einem Federstahl auf. Das erste Federteil 3 dient zur federnden Abstützung eines nicht dargestellten Radträgers eines Kraftfahrzeugs. Hierfür wird die Blattfeder 2 mit ihren Enden in entsprechende Aufnahmevorrichtungen, die mit der Fahrzeugkarosserie verbunden sind, aufgenommen.

Das erste Federteil 3 hat einen ersten Endabschnitt 5, der in einer der Aufnahmevorrichtungen zu lagern ist, einen zentralen Aufnahmebereich 6 zur Aufnahme eines Radträgers (nicht dargestellt) sowie einen Verbindungsabschnitt 7, der mit dem zweiten Federteil 4 verbunden ist. Der zentrale Aufnahmebereich 6, welcher innerhalb eines mittleren Drittels des ersten Federteils 3 angeordnet ist, hat gegenüber den hieran längs anschließenden Bereichen eine größere Dicke D6. Die Oberseite 8 und die Unterseite 9 des Aufnahmebereichs 6 haben ebene Flächen, die insbesondere parallel zueinander ausgerichtet sind. Durch die ebenen Flächen wird eine gute Montierbarkeit und gleichmäßige Krafteinleitung des Radträgers in die Blattfeder 2 ermöglicht. Der Aufnahmebereich 6 kann beispielsweise eine Länge von 150 mm bis 200 mm aufweisen. Die an den Aufnahmebereich 6 seitlich anschließenden Bereiche haben in unbelasteter Einbaulage der Blattfeder 2 jeweils eine Steigung, die ausgehend vom Aufnahmebereich in Richtung zum jeweiligen Ende des ersten Federteils ansteigt. Die Dicke des ersten Federteils 3 ist über der Länge variabel. Der erste Endabschnitt 5 ist verdickt und hat zum Ende hin eine sich leicht keilförmig erweiternde Kontur. Der Verbindungsabschnitt 7 hat eine sich zum Ende hin leicht verjüngende Kontur.

Das zweite Federteil 4 hat einen zweiten Endabschnitt 12, der in einer entsprechenden zweiten Aufnahmevorrichtung (nicht dargestellt) des Kraftfahrzeugs zu lagern ist, einen Biegeabschnitt 13, einen Krümmungsabschnitt 14 und einen Verbindungsabschnitt 15, der mit dem ersten Federteil 3 verbunden ist. Zur Verbindung des ersten und des zweiten Federteils 3, 4 sind die Verbindungsabschnitte 7, 12 überlappend angeordnet und mittels Schraubenverbindungen 16, 17 verspannt. Hierfür ist das zweite Federteil 4 mit seinem Verbindungsabschnitt 12 auf einer Oberseite des ersten Federteils 3 aufgesetzt. Von unten ist eine Gegenplatte 18 an den Verbindungsabschnitt 7 des ersten Federteils 3 angesetzt. Schrauben 16 sind durch entsprechende Bohrungen in den Verbindungsabschnitten 7, 12 und in der Gegenplatte 18 durchgesteckt, an deren Enden Muttern 17 aufgeschraubt sind. Auf diese Weise ist der Verbindungsabschnitt 7 des ersten Federteils 3 sicher mit dem zweiten Federteil verspannt.

Das erste Federteil 3 weist im Einbauzustand eine Haupterstreckung in Längsrichtung des Kraftfahrzeugs (horizontale Richtung) auf. Das zweite Federteil 4 hat demgegenüber eine stärker zur Hochrichtung (vertikaler Richtung) des Kraftfahrzeugs orientierte Haupterstreckung. Im Einbauzustand weist das erste Ende 5 vorzugsweise in Fahrtrichtung nach vorne, während das zweite Ende 12 hinten liegt und insbesondere nach unten gerichtet ist. Das erste Federteil 3 federt bei Belastung der Blattfeder 2 ein und bildet insofern einen Federungsabschnitt. Das zweite Federteil 4 verbiegt sich bei Belastung der Blattfeder 3 und bildet insofern einen Biegeabschnitt. Dabei führen die vom Radträger in den Federungsabschnitt eingeleiteten Vertikalkräfte zu einer Zugbelastung im Federungsabschnitt, wodurch die Biegung des Biegeabschnitts in Richtung zum entfernten Endabschnitt 5 bewirkt wird.

Das erste und zweite Federteil 3, 4 unterscheiden sich hinsichtlich ihres Werkstoffs, ihrer Länge und Krümmung voneinander. Es ist erkennbar, dass Länge des ersten Federteils 3 um ein Vielfaches größer als die des zweiten Federteils 4, wobei das Verhältnis von Länge des ersten Federteils 3 zur Länge des zweiten Federteils 4 vorzugsweise größer als zwei ist und/oder kleiner als fünf ist. Das erste Federteil 3 hat eine untere konvexe beziehungsweise obere konkave Wölbung, insbesondere mit einem mittleren Krümmungsradius R3 aufweist. Das zweite Federteil 4 hat eine untere konkave beziehungsweise eine obere konvexe Wölbung. Insofern findet im Verbindungsbereich der beiden Federteile 3, 4 eine Krümmungsumkehr des Blattfederverlaufs statt. Über die Ausgestaltung des ersten Federteils 3 und des zweiten Federteils 4 lässt sich das Federungsverhalten und damit die Progression der Blattfeder 3 bei Belastung einstellen. Je länger das zweite Federteil 4 ist, desto weicher ist die Feder. Bei der vorliegenden Ausführungsform ist der mittlere Krümmungsradius R3 des ersten Federteils 3 um ein Vielfaches größer als der Krümmungsradius R14 des Krümmungsabschnitts 14 des zweiten Federteils.

Das erste Federteil 3 ist aus einem faserverstärkten Kunststoffmaterial hergestellt, insbesondere aus einem glasfaserverstärkten Kunststoff (GFK), wobei andere Fasern nicht ausgeschlossen sind. Die Herstellung kann beispielsweise im Wege des Harzinjektionsverfahrens (Resin Transfer Moulding, RTM) oder durch ein Pressverfahren erfolgen. Dabei werden unidirektionale vorimprägnierten Fasern, sogenannten Prepregs, mit duroplastischer oder thermoplastischer Matrix verpresst.

Das zweite Federteil 4 ist aus einem vergüteten Federstahl hergestellt. Als Werkstoff für den Federstahl werden härtbare Stähle verwendet, wobei die Federeigenschaften durch Zusatz verschiedener Legierungselemente beeinflusst werden können. Besonders gut geeignet für die Anforderungen an Federn sind Silizium-Chrom-Stähle, Silizium-Chrom-Vanadium-Stähle und Chrom-Vanadium-Stähle (beispielsweise 51 CrV4). Es ist insbesondere in Figur 1d erkennbar, dass das zweite Federteil 4 eine variable Dicke über der Länge aufweist. Die Dicke D15 des Verbindungsabschnitts 15 ist größer als die Dicke D14 des Krümmungsabschnitts 14. Der Endabschnitt 12 hat eine nochmals reduzierte Dicke D12. Die Dicke D15 kann beispielsweise zwischen 4,5 und 5,5 mm liegen, die Dicke D14 beispielsweise zwischen 3,5 und 4,5 mm und die Dicke D12 beispielsweise bei weniger als 4,0 mm.

Zur Herstellung einer variablen Dicke über der Länge kann das zweite Federteil 4 aus flexibel gewalztem Bandmaterial hergestellt werden. Eine mögliche Verfahrensführung kann die Schritte flexibles Walzen, Glühen, Längs- bzw. Querteilen, Feinstanzen, Vergüten, Strahlen der Oberfläche, Setzen und Beschichten umfassen.

Es ist insbesondere in Figur 1e erkennbar, dass die Breite des zweiten Federteils 4 über der Länge variiert. Der Verbindungsabschnitt 15 hat die kleinste Breite B15. Im Übergang zwischen Verbindungsabschnitt 15 und Krümmungsabschnitt 14 sowie in letzterem selbst, nimmt die Breite kontinuierlich zu. Im Biegeabschnitt 13 und Endabschnitt 12 ist die Breite B13 am größten.

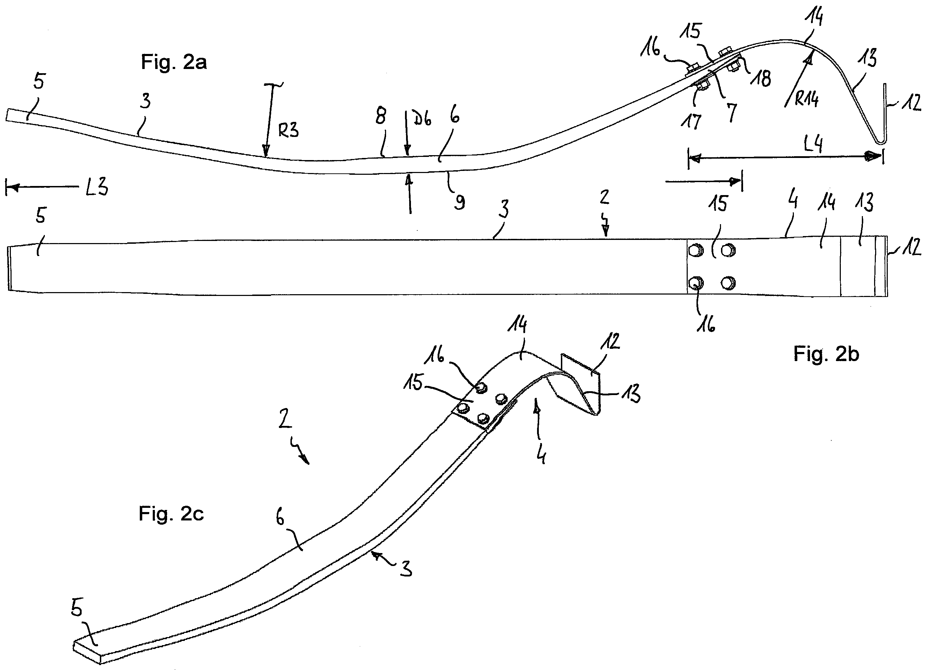

Die Figuren 2a bis 2c, welche im Folgenden gemeinsam beschrieben werden, zeigen eine erfindungsgemäße Blattfeder 2 in einer zweiten Ausführungsform. Diese entspricht weitestgehend der Ausführungsform gemäß den Figuren 1a bis 1e, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in Figur 1. Der einzige Unterschied der vorliegenden Ausführungsform gemäß den Figuren 2a bis 2c besteht darin, dass der Endabschnitt 12 des zweiten Federteils 4 nach oben abgebogen ist. Hiermit kann in Abhängigkeit von der Einbausituation eine Rückführung des Endabschnitts 12 an einen beliebigen Befestigungspunkt erfolgen. Die beiden Enden werden wie bei der obigen Ausführungsform vorzugsweise momentenfest und verschiebefest gelagert.

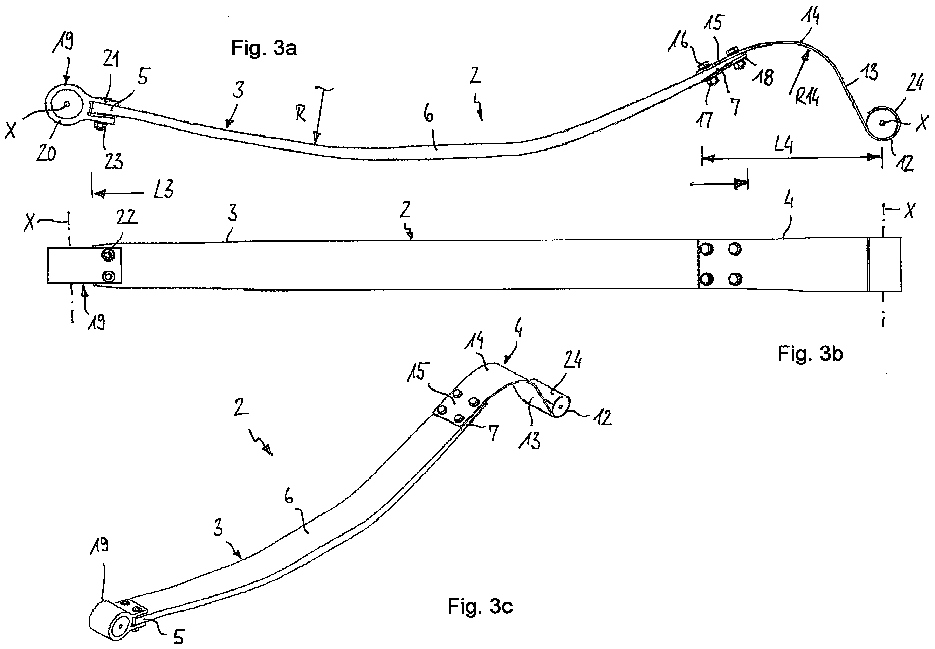

Die Figuren 3a bis 3c, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 1a bis 1e, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 1a bis 1 e.

Ein erster Unterschied der vorliegenden Ausführungsform gemäß den Figuren 3a bis 3c besteht darin, dass am Endabschnitt 5 des ersten Federteils 3 ein Lagerelement 19 befestigt ist, das auch als Lagerauge bezeichnet werden kann. Das Lagerelement 19 weist eine Buchse 20 zur drehbaren Lagerung an einer Aufnahmevorrichtung (nicht gezeigt) und einen Befestigungsabschnitt 21 auf der durch zwei voneinander beabstandete Stege gebildet ist, in die der Endabschnitt 5 der Feder eingreift. Zur Fixierung sind Schrauben 22 vorgesehen, welche durch entsprechende Bohrungen im Befestigungsabschnitt 21 und Endabschnitt 5 durchgesteckt und mit Muttern 23 verspannt sind.

Ein weiterer Unterschied besteht darin, dass der Endabschnitt 12 des zweiten Federteils 4 ein angeformtes Lagerauge 24 aufweist. Mit den beiden Lageraugen 19, 24 kann die Blattfeder 2 in entsprechenden Aufnahmevorrichtungen verschiebungsfest und momentenfrei aufgenommen werden.

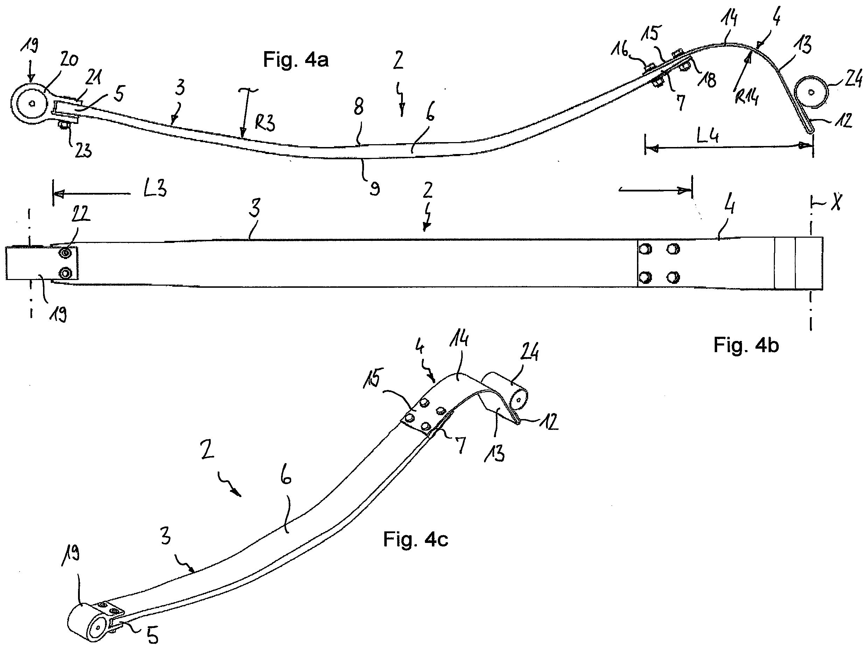

Die Figuren 4a bis 4c, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 3a bis 3c, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 3a bis 3c, beziehungsweise 1 a bis 1 e.

Die vorliegende Ausführungsform gemäß den Figuren 4a bis 4c hat am ersten Endabschnitt 5 ein Lagerelement 19, wie bei der Ausführungsform gemäß Figur 3. In Abwandlung zur Ausführungsform gemäß Figur 3 ist der zweite Endabschnitt 12 des zweiten Federteils 4 nach oben abgebogen, so dass das zweite Lagerelement 24 oberhalb eines unteren Teils des Biegeabschnitts 13 liegt. Hiermit ergibt sich ein anderer Befestigungspunkt zur Lagerung der Blattfeder an der Fahrzeugkarosserie.

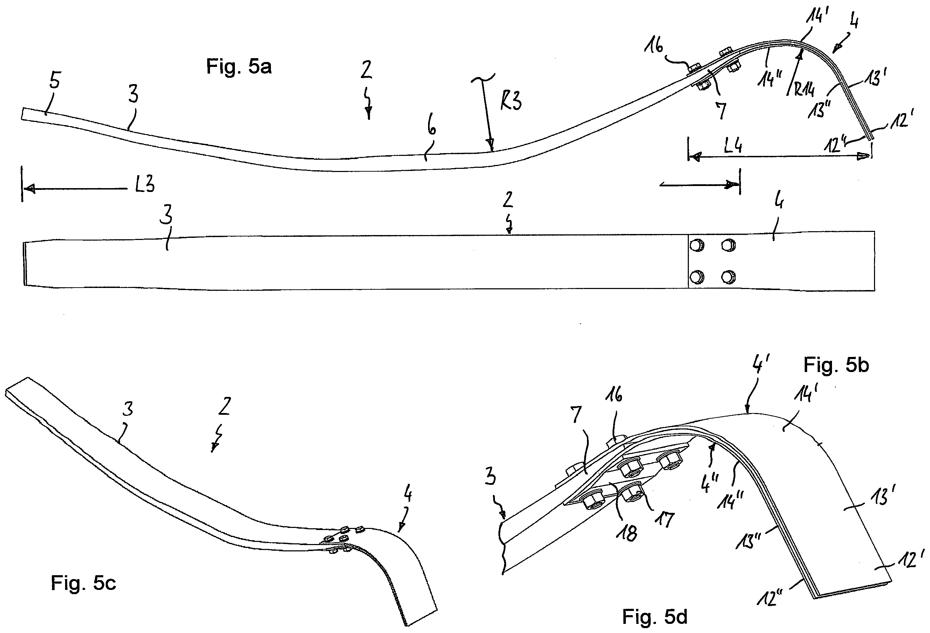

Die Figuren 5a bis 5d, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 1a bis 1e, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 1a bis 1 e.

Ein Unterschied der vorliegenden Ausführungsform gemäß den Figuren 5a bis 5d besteht in der Ausgestaltung des zweiten Federteils 4. Dieses ist nämlich vorliegend zweiteilig gestaltet und umfasst zwei Federlagen 4', 4", die funktional parallel zueinander angeordnet sind. Dabei ist eine erste Federlage 4' mit ihrem Verbindungsabschnitt 15' auf eine Oberseite des ersten Federteils 3 aufgesetzt und eine zweite Federlage 4" ist an eine Unterseite des ersten Federteils 3 angesetzt, so dass der Verbindungsabschnitt 7 des ersten Federteils 3 zwischen den beiden Federlagen 4', 4" mittels Schrauben 16 verspannt ist. Die beiden Endabschnitte 12', 12" der Federlagen 4', 4" sind in einer entsprechenden Aufnahmevorrichtung zu lagern. Insgesamt werden durch die zweilagige Ausgestaltung die Spannungen im zweiten Federteil 4 reduziert. Die beiden Federenden werden vorzugsweise momentenfest und verschiebungsfest gelagert.

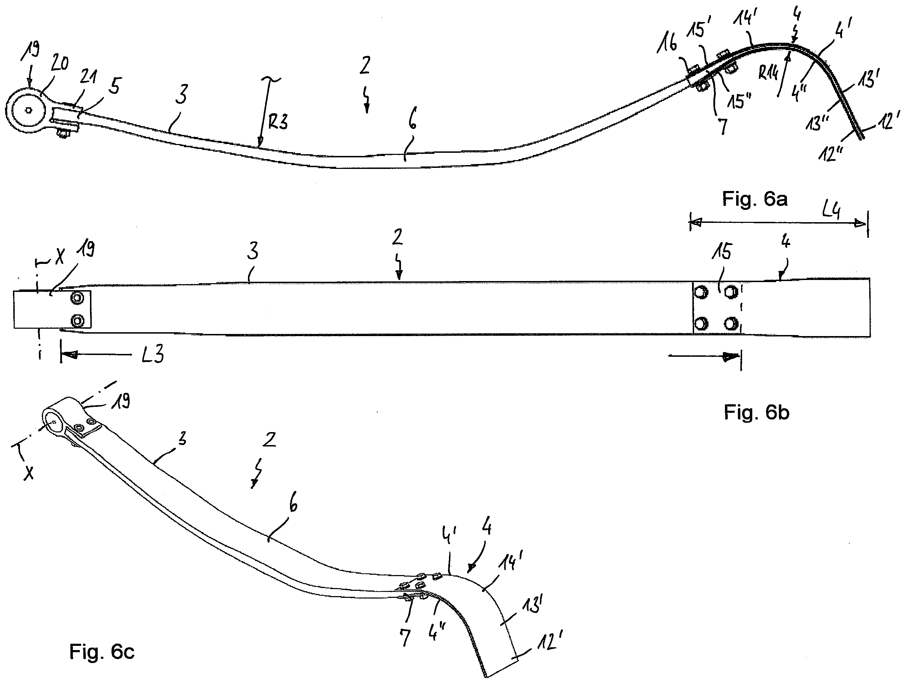

Die Figuren 6a bis 6c, welche im Folgenden gemeinsam beschrieben werden, zeigen eine erfindungsgemäße Blattfeder 2 in einer weiteren Ausführungsform. Diese entspricht einer Kombination der Ausführungsformen gemäß den Figuren 5a bis 5d einerseits und gemäß den Figuren 3a bis 3c andererseits, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 5a bis 5d, beziehungsweise in den Figuren 3a bis 3c, beziehungsweise 1a bis 1 e.

Es ist erkennbar, dass am ersten Endabschnitt 5 ein Lagerelement 19 befestigt ist, wie in den Figuren 3a bis 3c gezeigt und beschrieben. Das zweite Federteil 4 ist wie in der Ausführungsform gemäß den Figuren 5a bis 5d gezeigt, zweilagig (mit Federlagen 4', 4") ausgestaltet. Insofern verbindet die vorliegende Blattfeder die technischen Eigenschaften, dass das erste Ende 5 momentenfrei und verschiebungsfest in einer entsprechenden Aufnahmevorrichtung gelagert werden kann, und dass die bei Betrieb im zweiten Federteil 4 auftretenden Spannungen reduziert sind.

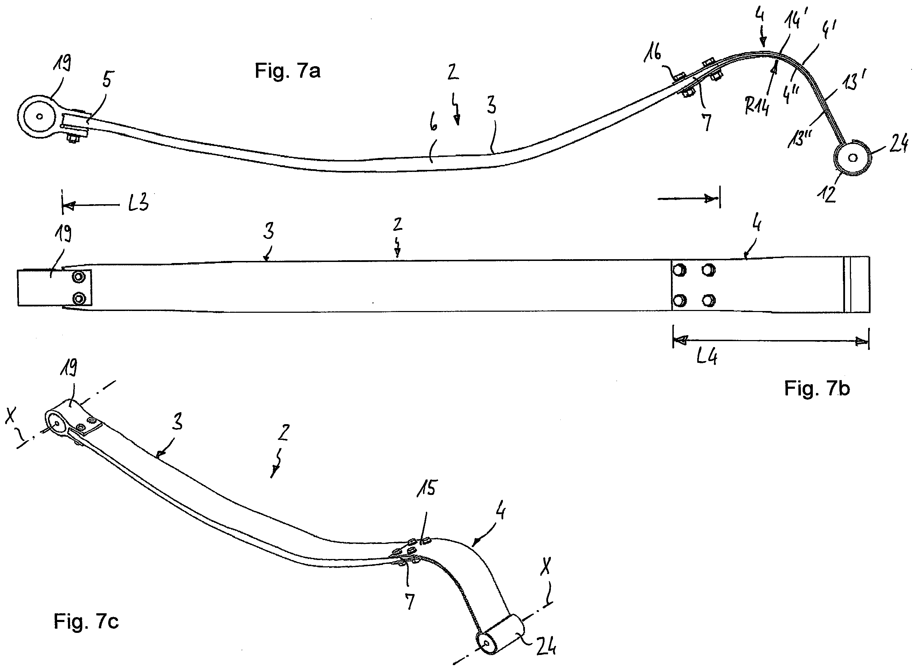

Die Figuren 7a bis 7c, welche im Folgenden gemeinsam beschrieben werden, zeigen eine erfindungsgemäße Blattfeder 2 in einer weiteren Ausführungsform. Diese entspricht einer Kombination der Ausführungsformen gemäß den Figuren 3a bis 3c beziehungsweise gemäß den Figuren 6a bis 6c, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 3a bis 3c, beziehungsweise in den Figuren 6a bis 6c, is 3c, beziehungsweise 1a bis 1 e.

Es ist erkennbar, dass am ersten Endabschnitt 5 ein Lagerelement 19 befestigt ist und dass am zweiten Endabschnitt 12 ein Lagerelement 24 angeformt ist, wie in den Figuren 3a bis 3c gezeigt und beschrieben. Das zweite Federteil 4 ist ferner wie in der Ausführungsform gemäß den Figuren 6a bis 6c gezeigt, zweilagig (mit Federlagen 4', 4") ausgestaltet. Insofern verbindet die vorliegende Blattfeder die technischen Eigenschaften, dass beide Enden 5, 12 momentenfrei und verschiebungsfest in einer jeweiligen Aufnahmevorrichtung gelagert werden können, und dass das zweite Federteil 4 bei Betrieb reduzierten Spannungen ausgesetzt ist.

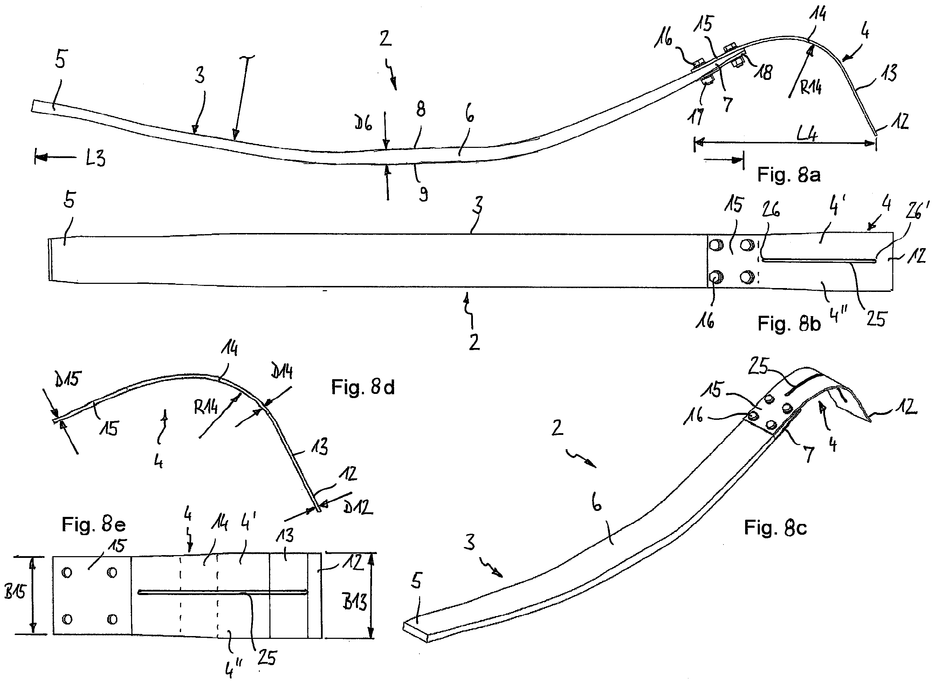

Die Figuren 8a bis 8d, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 1a bis 1e, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 1a bis 1 e.

Eine Besonderheit der vorliegenden Ausführungsform gemäß den Figuren 8a bis 8d besteht darin, dass das zweite Federteil 4 einen Schlitz 25 aufweist. Auf diese Weise bildet das zweite Federteil 4 zwei parallel zueinander verlaufende Federlagen 4', 4", die auch eine funktional parallele Federwirkung erzeugen. Es ist erkennbar, dass der Schlitz 25 endlich ist, das heißt die Enden 26, 26' des Schlitzes sind jeweils vom endseitigen Rand des Federteils 4 beabstandet. Das Federteil 4 lässt sich als Blechumformteil aus Federstahl herstellen, in das vor dem Umformen der Schlitz 25 eingearbeitet wird. Im Übrigen entspricht die vorliegende Ausführungsform derjenigen gemäß den Figuren 1a bis 1e, auf deren Beschreibung insofern verwiesen wird.

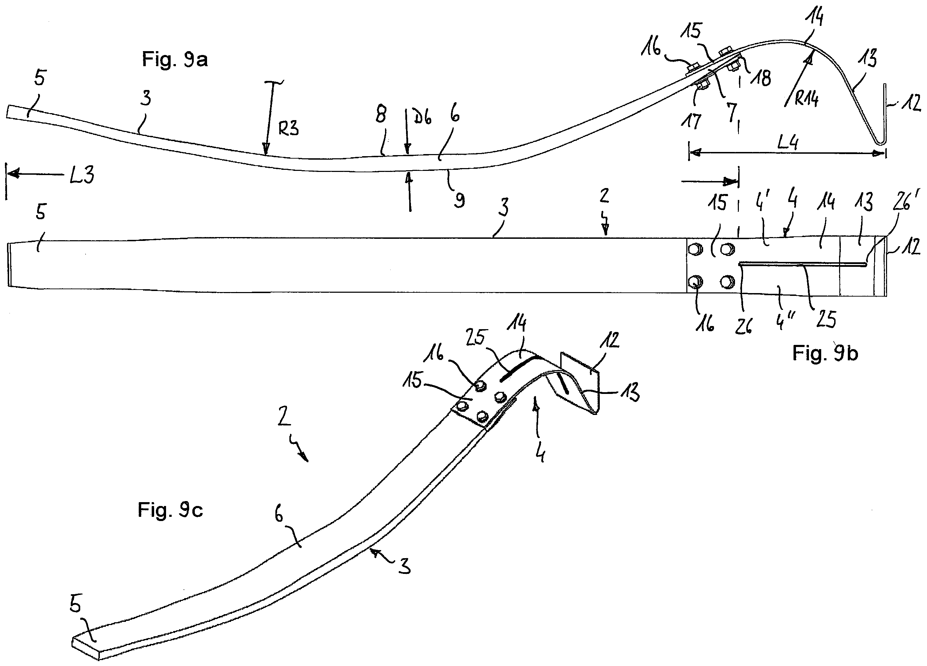

Die Figuren 9a bis 9c, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 2a bis 2c, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 2a bis 2c.

Der einzige Unterschied der vorliegenden Ausführungsform gemäß den Figuren 9a bis 9c besteht darin, dass das zweite Federteil 4 einen Schlitz 25 aufweist, ähnlich wie die Ausführungsform gemäß den Figuren 8a bis 8d. Auf diese Weise bildet das zweite Federteil 4 zwei parallel zueinander verlaufende Federlagen 4', 4", die auch eine funktional parallele Federwirkung erzeugen. Es ist erkennbar, dass der Schlitz 25 endlich ist, das heißt die Enden 26, 26' des Schlitzes sind jeweils vom endseitigen Rand des Federteils 4 beabstandet. Im Übrigen entspricht die vorliegende Ausführungsform derjenigen gemäß den Figuren 2a bis 2c, auf deren Beschreibung insofern verwiesen wird.

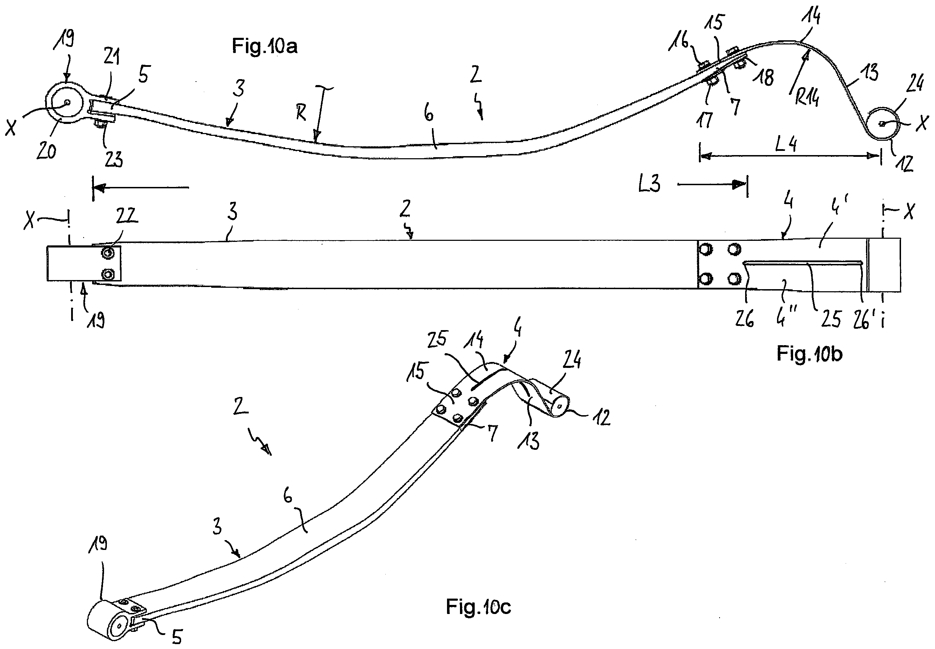

Die Figuren 10a bis 10c, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 3a bis 3c, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 3a bis 3c.

Der einzige Unterschied der vorliegenden Ausführungsform gemäß den Figuren 10a bis 10c besteht darin, dass das zweite Federteil 4 einen Schlitz 25 aufweist, ähnlich wie die Ausführungsformen gemäß den Figuren 8 und 9. Das zweite Federteil 4 hat somit zwei parallel zueinander verlaufende Federlagen 4', 4", die auch eine funktional parallele Federwirkung erzeugen. Der Schlitz 25 ist endlich, das heißt die beiden Federlagen 4', 4" sind an den Enden miteinander verbunden. Im Übrigen entspricht die vorliegende Ausführungsform derjenigen gemäß den Figuren 3a bis 3c, auf deren Beschreibung insofern verwiesen wird.

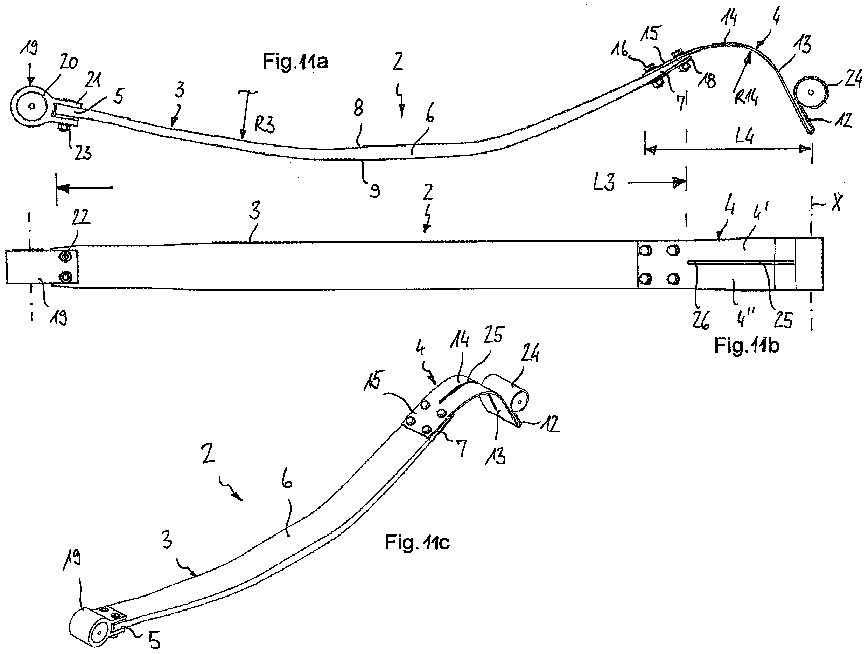

Die Figuren 11a bis 11c, welche im Folgenden gemeinsam beschrieben werden, zeigen eine erfindungsgemäße Blattfeder 2 in einer weiteren Ausführungsform. Diese entspricht weitestgehend der Ausführungsform gemäß den Figuren 4a bis 4c, so dass hinsichtlich der Gemeinsamkeiten auf obige Beschreibung Bezug genommen wird. Dabei sind gleiche beziehungsweise abgewandelte Einzelheiten mit gleichen Bezugszeichen versehen wie in den Figuren 4a bis 4c.

Der einzige Unterschied der vorliegenden Ausführungsform gemäß den Figuren 11a bis 11c besteht darin, dass das zweite Federteil 4 einen Schlitz 25 aufweist, ähnlich wie die Ausführungsformen gemäß den Figuren 8 bis 10. Das zweite Federteil 4 hat somit zwei parallel zueinander verlaufende Federlagen 4', 4", die auch eine funktional parallele Federwirkung erzeugen. Der Schlitz 25 ist endlich, das heißt die beiden Federlagen 4', 4" sind an den Enden miteinander verbunden. Im Übrigen entspricht die vorliegende Ausführungsform derjenigen gemäß den Figuren 4a bis 4c, auf deren Beschreibung insofern verwiesen wird.

Es versteht sich, dass auch weitere Ausführungsformen aus Kombinationen der oben genannten Ausführungsbeispiele möglich sind, die hier nicht im Einzelnen dargestellt sind. Insbesondere ist es auch möglich, jede der Ausführungsformen gemäß den Figuren 5, 6 und 7 mit den Ausführungsformen gemäß den Figuren 8 bis 11 zu kombinieren. Konkret können eine oder mehrere der übereinander liegenden Federlagen 4', 4" der Ausführungsformen gemäß den Figuren 5, 6 und 7 auch mit einem Schlitz 25 ausgeführt werden, wie in den Figuren 8 bis 11 gezeigt. Somit entsteht ein zweites Federteil 4 mit zwei übereinander liegenden Federlagen 4', 4", die wiederum jeweils zwei seitlich benachbarte, zueinander parallele Teilfederlagen 4', 4" aufweisen. Insgesamt entsteht somit ein Federteil 4 mit vier funktional parallelen Teilfederlagen.

Für die Aufnahmevorrichtungen für alle vorstehend genannten Ausführungsformen gilt folgendes: Eine Aufnahmevorrichtung für ein zungenförmiges Federende (ohne Lagerauge) kann derart gestaltet sein, dass die Blattfeder verschiebefest und momentenfrei aufgenommen ist. Insbesondere kann vorgesehen sein, dass das jeweilige Ende in Bezug auf alle drei Raumachsen (x, y, z) im Verschiebungssinn im Wesentlichen starr gehalten ist.

Eine Aufnahmevorrichtung für ein Federende mit Lagerauge kann derart gestaltet sein, dass der jeweilige Endabschnitt um eine Schwenkachse (x) der Aufnahmevorrichtung schwenkbar gelagert ist. Die Schwenkachse verläuft im Einbauzustand etwa quer zur Fahrzeuglängsachse, wobei gewisse Winkelabweichungen denkbar sind. Gegenüber den anderen beiden Raumachsen (y, z) ist das jeweilige Federende im Drehsinn zumindest im Wesentlichen starr gehalten, das heißt nicht schwenkbar.

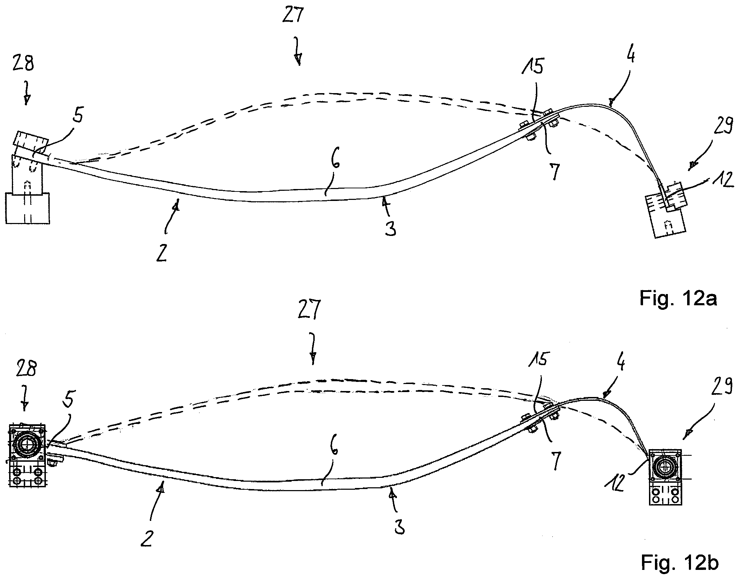

Die Zuordnung von verschiebefesten und schwenkbaren Federenden ist beliebig und an die technischen Anforderungen anzupassen. Die Figuren 12a und 12b, welche nachstehend gemeinsam beschrieben werden, zeigen exemplarisch zwei Blattfederanordnungen 27 mit Blattfeder 2 und Aufnahmevorrichtungen 28, 29.

Die Blattfederanordnung 27 gemäß Figur 12a weist eine Blattfeder 2 gemäß den Figuren 1a bis 1 e auf sowie zwei entsprechende Aufnahmevorrichtungen 28, 29 zur momentenfesten Lagerung. Konkret ist das erste Federende 5 der Blattfeder 2 in der ersten Aufnahmevorrichtung 28 momentenfest und verschiebefest fixiert. Das zweite Federende 12 ist in der zweiten Aufnahmevorrichtung 29 momentenfest und verschiebefest befestigt.

Die Blattfederanordnung gemäß Figur 12b umfasst eine Blattfeder 2 gemäß den Figuren 3a bis 3c und entsprechend zwei Aufnahmevorrichtungen 28, 29 zur momentenfreien Lagerung. Dabei ist das erste Federende 5 der Blattfeder 2 mit dem Lagerauge 20 in der ersten Aufnahmevorrichtung 28 momentenfrei und verschiebefest gelagert. Das zweite Federende 12 ist mit dem Lagerauge 24 in der zweiten Aufnahmevorrichtung 29 momentenfrei und verschiebefest gelagert.

Die Blattfederanordnungen 27 sind in unbelastetem Einbauzustand der jeweiligen Blattfeder 2 gezeigt, bei der das erste Federteil 3 eine untere konvexe Wölbung hat. Mit unbelastetem Einbauzustand ist insbesondere gemeint, dass keine oder keine nennenswerten Kräfte auf die Blattfeder einwirken. Bei zunehmender Belastung der Blattfeder 2 aufgrund durch die Fahrzeugachse eingeleiteten Kräften verformt sich das erste Federteil 3 nach oben. Dabei ist vorgesehen, dass das erste Federteil 3 in belastetem Einbauzustand der Blattfeder 2 bei maximaler Einfederung eine untere konkave Wölbung aufweist (schematisch gestrichelt dargestellt). Es findet also mit zunehmender Belastung der Blattfeder 2 eine Umkehr der Wölbung des ersten Federteils 3 von konvex nach konkav statt, wobei zwischen diesen beiden Positionen eine Neutralstellung durchlaufen wird. Dabei ist die Blattfeder 2 vorzugsweise so gestaltet, dass die Neutralstellung in federfähigem belasteten Einbauzustand anliegt, das heißt bei ruhendem un- oder gering beladenem Fahrzeug. Bei weiter steigender Belastung, das heißt in beladenem Zustand oder dynamischer Einfederbewegung wird die Blattzugfeder 2 weiter elastisch verformt, wobei das erste Federteil 3 zunehmend auf Zug belastet wird. Mit anderen Worten ist die Blattfederanordnung 27 derart gestaltet, dass das erste Federteil 3 der Blattfeder 2 bei elastischer Verformung durch vom Radträger eingeleitete Vertikalkräfte in einem ersten Federwegbereich auf Druck belastet wird und, bei zunehmender Belastung und damit zunehmender elastischer Verformung, in einem zweiten Federwegbereich auf Zug belastet wird.

Insgesamt bieten die erfindungsgemäßen Blattzugfedern den Vorteil einer guten Kombination aus Festigkeit und geringem Gewicht, bei gleichzeitig progressiver Federkennlinie.

### Bezugszeichenliste

- 2: Blattfeder
- 3: erstes Federteil
- 4: zweites Federteil
- 4': erste Federlage
- 4": zweite Federlage
- 5: Endabschnitt
- 6: Aufnahmebereich
- 7: Verbindungsabschnitt
- 8: Oberseite
- 9: Unterseite
- 12, 12', 12": Verbindungsabschnitt
- 13, 13', 13": Biegeabschnitt
- 14, 14', 14": Krümmungabschnitt
- 15, 15', 15": Verbindungsabschnitt
- 16: Schraube
- 17: Mutter
- 18: Halteplatte
- 19: Lagerelement
- 20: Buchse
- 21: Befestigungsabschnitt
- 22: Schraube
- 23: Mutter
- 24: Lagerelement
- 25: Schlitz
- 26, 26': Ende
- 27: Blattfederanordnung
- 28, 29: Aufnahmevorrichtung
- B: Breite
- D: Dicke
- L: Länge
- R: Radius

## Patentansprüche

1. Blattfederanordnung für eine Radaufhängung eines Kraftfahrzeugs, umfassend:
eine Blattfeder (2) mit einem ersten Federteil (3) aus einem faserverstärkten Kunststoffmaterial und einem zweiten Federteil (4) aus einem Stahlmaterial, nämlich Federstahl, wobei das erste Federteil (3) und das zweite Federteil (4) miteinander verbunden sind, wobei das Verhältnis der Länge (L3) des ersten Federteils (3) zur Länge (L4) des zweiten Federteils (4) größer als zwei ist, und wobei im entspannten Zustand das erste Federteil (3) eine untere konvexe Wölbung aufweist und das zweite Federteil (4) ausgehend vom ersten Federteil (3) nach unten abgebogen ist und eine untere konkave Wölbung aufweist;
eine erste Aufnahmevorrichtung (28), in der ein erster Endabschnitt (5) der Blattfeder (2) gelagert ist;
eine zweite Aufnahmevorrichtung (29), in der ein zweiter Endabschnitt (12) der Blattfeder (2) gelagert ist;
wobei die erste Aufnahmevorrichtung (28) und die zweite Aufnahmevorrichtung (29) derart gestaltet sind, dass der erste Endabschnitt (5) und der zweite Endabschnitt (12) der Blattfeder (2) verschiebungsfest relativ zueinander gehalten sind.

2. Blattfederanordnung nach Anspruch 1,
**dadurch gekennzeichnet, dass** das zweite Federteil (4) zumindest eine erste Federlage (4') und eine zweite Federlage (4") umfasst, die mit dem ersten Federteil (3) verbunden sind.

3. Blattfederanordnung nach Anspruch 2,
**dadurch gekennzeichnet, dass** die erste Federlage (4') mit einer oberen Seite des ersten Federteils (3) verbunden ist und die zweite Federlage (4") mit einer unteren Seite des ersten Federteils (3) verbunden ist.

4. Blattfederanordnung nach einem der Ansprüche 1 bis 3,
**dadurch gekennzeichnet, dass** das zweite Federteil (4) zumindest einen Schlitz (25) aufweist, der sich in Längsrichtung erstreckt.

5. Blattfederanordnung nach Anspruch 4,
**dadurch gekennzeichnet, dass** zumindest ein Ende (26, 26') des Schlitzes (25) von einem Rand des zweiten Federteils (4) beabstandet ist.

6. Blattfederanordnung nach einem der Ansprüche 1 bis 5,
**dadurch gekennzeichnet, dass** ein größter Krümmungsradius (R14) des zweiten Federteils (4) kleiner ist als ein größter Krümmungsradius (R3) des ersten Federteils (3).

7. Blattfederanordnung nach einem der Ansprüche 1 bis 6,
**dadurch gekennzeichnet, dass** das erste Federteil (3) einen zentralen Aufnahmebereich (6) zur Aufnahme eines Anschlussbauteils aufweist, wobei der zentrale Aufnahmebereich (6) in einem mittleren Drittel des ersten Federteils (3) angeordnet ist.

8. Blattfederanordnung nach Anspruch 7,
**dadurch gekennzeichnet, dass** der zentrale Aufnahmebereich (6) eine größere Dicke (D6) hat als hieran anschließende Bereiche des ersten Federteils (5), wobei die anschließenden Bereiche ausgehend vom zentralen Aufnahmebereich (6) zu beiden Seiten in Richtung zum jeweiligen Ende des ersten Federteils (5) in unbelasteter Einbaulage der Blattfeder ansteigen.

9. Blattfederanordnung nach einem der Ansprüche 1 bis 8,
**dadurch gekennzeichnet, dass** das zweite Federteil (4) eine variable Dicke (D) über der Länge aufweist und insbesondere aus flexibel gewalztem Bandmaterial hergestellt ist.

10. Blattfederanordnung nach einem der Ansprüche 1 bis 9,
**dadurch gekennzeichnet, dass** das erste Federteil (3) und das zweite Federteil (4) in einem Überlappungsbereich (7, 15) miteinander verbunden sind, insbesondere mittels Schrauben (16) und/oder einem Gummielement.

11. Blattfederanordnung nach Anspruch 10,
**dadurch gekennzeichnet, dass** die untere konvexe Krümmung des ersten Federteils (3) und die untere konkave Krümmung des zweiten Federteils (4) im Überlappungsbereich (7, 15) ineinander übergehen.

12. Blattfederanordnung nach einem der Ansprüche 1 bis 11,
**dadurch gekennzeichnet, dass** das zweite Federteil (4) aus Federstahl hergestellt ist.

13. Blattfederanordnung nach einem der Ansprüche 1 bis 12,
**dadurch gekennzeichnet, dass** zumindest eine von der ersten und der zweiten Aufnahmevorrichtung (28, 29) derart gestaltet ist, dass der jeweils zugehörige Endabschnitt (5, 12) um eine quer zur Fahrzeuglängsachse verlaufende Schwenkachse (x) schwenkbar gelagert ist.

## Claims

1. Leaf spring assembly for a wheel suspension of a motor vehicle, comprising:
a leaf spring (2) with a first spring part (3) made from a fibre reinforced plastic material and a second spring part (4) made from a steel material, namely spring steel, wherein the first spring part (3) and the second spring part (4) are connected to each other, wherein the ratio of the length (L3) of the first spring part (3) to the length (L4) of the second spring part (4) is greater than two, and wherein in a relaxed condition the first spring part (3) comprises a lower convex curvature and the second spring part (4) is bent downwardly starting from the first spring part (3) and has a lower concave curvature;
a first receiving device (28), in which a first end portion (5) of the leaf spring (2) is supported;
a second receiving device (29), in which a second end portion (12) of the leaf spring (2) is supported;
wherein the first receiving device (28) and the second receiving device (29) are formed such, that the first end portion (5) and the second end portion (12) of the leaf spring (2) are held non-displaceably relative to each other.

2. Leaf spring assembly according to claim 1,
**characterised in that** the second spring part (4) comprises at least a first spring layer (4') and a second spring layer (4") which are connected to the first spring part (3).

3. Leaf spring assembly according to claim 2,
**characterised in that** the first spring layer (4') is connected to an upper side of the first spring part (3) and the second spring layer (4") is connected to a lower side of the first spring part (3).

4. Leaf spring assembly according to one of claims 1 to 3,
**characterised in that** the second spring part (4) comprises a slit (25) which extends in longitudinal direction.

5. Leaf spring assembly according to claim 4,
**characterised in that** at least one end (26, 26') of the slit (25) is arranged with a distance from an edge of the second spring part (4).

6. Leaf spring assembly according to one of claims 1 to 5,
**characterised in that** a largest curvature radius (R14) of the second spring part (4) is smaller than a largest curvature radius (R3) of the first spring part (3).

7. Leaf spring assembly according to one of claims 1 to 6,
**characterised in that** the first spring part (3) has a central receiving region (6) for receiving a connection component, wherein the central receiving region (6) is arranged in a middle third of the first spring part (3).

8. Leaf spring assembly according to claim 7,
**characterised in that** the central receiving region (6) has a larger thickness (D6) than hereto adjoining regions of the first spring part (5), wherein the adjoining regions starting from the central receiving region (6) are inclined at both sides towards a respective end of the first spring part (5) in an unloaded built-in condition of the leaf spring.

9. Leaf spring assembly according to one of claims 1 to 8,
**characterised in that** the second spring part (4) has a variable thickness (D) along the length, and, more particularly, is made from a flexibly rolled strip material.

10. Leaf spring assembly according to one of claims 1 to 9,
**characterised in that** the first spring part (3) and the second spring part (4) are connected to each other in an overlapping region (7, 15), in particular by means of screws (16) and/or a rubber element.

11. Leaf spring assembly according to claim 10,
**characterised in that** the lower convex curvature of the first spring part (3) and the lower concave curvature of the second spring part (4) change into one another in the overlapping region (7, 15).

12. Leaf spring assembly according to one of claims 1 to 11,
**characterised in that** the second spring part (4) is made from spring steel.

13. Leaf spring assembly according to any one of claims 1 to 12,
**characterised in that** at least one of the first or the second receiving device (28, 29) is formed such, that the respectively corresponding end portion (5, 12) is pivotably supported around a pivot axis (x) extending transversally a longitudinal vehicle axis.

## Revendications

1. Agencement de ressorts à lame pour une suspension de roues d'un véhicule automobile, comprenant :
un ressort à lame (2) avec une première partie de ressort (3) dans un matériau plastique renforcé avec des fibres et une deuxième partie de ressort (4) dans un matériau acier, notamment de l'acier pour ressorts, la première partie de ressort (3) et la deuxième partie de ressort (4) étant reliées l'une à l'autre, le rapport entre la longueur (L3) de la première partie de ressort (3) et la longueur (L4) de la deuxième partie de ressort (4) étant supérieur à deux et à l'état détendu, la première partie de ressort (3) comportant un cintrage convexe inférieur et la deuxième partie de ressort (4) étant pliée vers le bas en partant de la première partie de ressort (3) et comportant un cintrage concave inférieur,
un premier dispositif de réception (28) dans lequel une première section d'extrémité (5) du ressort à lame (2) est logée,
un deuxième dispositif de réception (29) dans lequel une deuxième section d'extrémité (12) du ressort à lame (2) est logée,
le premier dispositif de réception (28) et le deuxième dispositif de réception (29) étant configurés de telle manière que la première section d'extrémité (5) et la deuxième section d'extrémité (12) du ressort à lame (2) sont maintenues solidaires en déplacement l'une par rapport à l'autre.

2. Agencement de ressorts à lame selon la revendication 1,
**caractérisé en ce que** la deuxième partie de ressort (4) comprend au moins une première couche de ressort (4') et une deuxième couche de ressort (4") qui sont reliées à la première partie de ressort (3).

3. Agencement de ressorts à lame selon la revendication 2,
**caractérisé en ce que** la première couche de ressort (4') est reliée à un côté supérieur de la paremière partie de ressort (3) et la deuxième couche de ressort (4") est reliée à un côté inférieur de la première partie de ressort (3).

4. Agencement de ressorts à lame selon l'une quelconque des revendications 1 à 3,
**caractérisé en ce que** la deuxième partie de ressort (4) comporte au moins une fente (25) qui s'étend dans le sens longitudinal.

5. Agencement de ressorts à lame selon la revendication 4,
**caractérisé en ce qu'**au moins une extrémité (26, 26') de la fente (25) est à distance d'un bord de la deuxième partie de ressort (4).

6. Agencement de ressorts à lame selon l'une quelconque des revendications 1 à 5,
**caractérisé en ce qu'**un rayon de courbe maximum (R14) de la deuxième partie de ressort (4) est plus petit qu'un rayon de courbe maximum (R3) de la première partie de ressort (3).

7. Agencement de ressorts à lame selon l'une quelconque des revendications 1 à 6,
**caractérisé en ce que** la première partie de ressort (3) comporte une zone de réception (6) centrale pour loger un composant de raccordement, la zone de réception centrale (6) étant disposée dans un tiers central de la première partie de ressort (3).

8. Agencement de ressorts à lame selon la revendication 7,
**caractérisé en ce que** la zone de réception centrale (6) possède une épaisseur plus importante (D6) que les zones s'y raccordant de la première partie de ressort (5), les zones se raccordant partant de la zone de réception centrale (6) vers les deux autres côtés en direction de l'extrémité respective de la première partie de ressort (5) montant dans la position de montage non chargée du ressort à lame.

9. Agencement de ressorts à lame selon l'une quelconque des revendications 1 à 8,
**caractérisé en ce que** la deuxième partie de ressort (4) comporte une épaisseur variable (D) sur la longueur et est en particulier fabriqué à partir d'un matériau de feuillard laminé de façon flexible.

10. Agencement de ressorts à lame selon l'une quelconque des revendications 1 à 9,
**caractérisé en ce que** la première partie de ressort (3) et la deuxième partie de ressort (4) sont reliées l'une à l'autre dans une zone de chevauchement (7, 15), en particulier au moyen de vis (16) et/ou d'un élément en caoutchouc.

11. Agencement de ressorts à lame selon la revendication 10,
**caractérisé en ce que** la courbe convexe inférieure de la première partie de ressort (3) et la courbe concave inférieure de la deuxième partie de ressort (4) passent l'une dans l'autre dans la zone de chevauchement (7, 15)

12. Agencement de ressorts à lame selon l'une quelconque des revendications 1 à 11,
**caractérisé en ce que** la deuxième partie de ressort (4) est fabriquée dans un acier pour ressorts.

13. Agencement de ressorts à lame selon l'une quelconque des revendications 1 à 12,
**caractérisé en ce qu'**au moins un des premier et deuxième dispositifs de réception (28, 29) est configuré de telle manière que la section d'extrémité (5, 12) respectivement correspondante est logée pouvant pivoter autour d'un axe de pivotement (x) passant transversalement à l'axe longitudinal du véhicule.
